# DEMANDE DE BREVET EUROPEEN

(11) **EP 3 698 996 A1**
(43) Date de publication de la demande: **26.08.2020**
(21) Numéro de dépôt: 20156529.8
(22) Date de dépôt: 11.02.2020
(51) Int. Cl.: B60G 3/20

(54) **SYSTÈME DE SUSPENSION BIDIRECTIONNELLE POUR ESSIEU À ROUES INDÉPENDANTES D'UN VÉHICULE**

(30) Priorité: 20.02.2019 FR 1901683
(71) Demandeur: Deschamps, Anthony, 27500 Fourmetot (FR)
(72) Inventeur: Deschamps, Anthony, 27500 Fourmetot (FR)
(74) Mandataire: Cabinet Chaillot

(57) **Abrégé**

L'invention concerne un système de suspension bidirectionnelle (3a, 3b) pour essieu à roues indépendantes de véhicule, comprenant un dispositif de suspension verticale de roue (5) et un dispositif de suspension horizontale de roue (6), ledit dispositif (6) comprend un bloc de suspension horizontale (7) configuré pour être monté à rotation sur le châssis du véhicule et un moyen d'amortissement horizontal relié au bloc de suspension horizontale (7), ledit dispositif (5) étant disposé entre le bloc (7) et le porte-fusée (13) de la roue (2a, 2b) associée, ledit dispositif (6) comprenant en outre un vérin électrique (16) disposé entre le bloc (7) et le porte-fusée (13) et commandé par un dispositif de commande (17) qui amène le vérin électrique (16) à modifier la direction de la roue (2a, 2b) en fonction de la position angulaire du bloc (7).

## Description

La présente invention concerne le domaine des systèmes de suspension de véhicule, et porte en particulier sur un système de suspension bidirectionnelle pour essieu à roues indépendantes d'un véhicule.

Lorsqu'une personne conduit un véhicule automobile, quelles que soient la marque et la gamme du véhicule automobile, elle rencontre toujours les mêmes désagréments lors de la conduite, à savoir les obstacles régulièrement rencontrés sur les routes tels que les dos-d'âne, les nids-de-poule, les trottoirs ou encore les déformations du bitume de la route.

Les systèmes de suspension actuels permettent uniquement un amortissement vertical des roues du véhicule automobile, c'est-à-dire un amortissement de haut en bas, en reliant, généralement à l'aide d'un ressort et d'un amortisseur, les masses non suspendues (typiquement la roue, les pièces d'entraînement de roue, souvent les systèmes de freinage, etc.) aux masses suspendues (typiquement le châssis, le moteur et tous les composants du véhicule fixés au châssis), ce qui permet d'améliorer le confort des passagers en maintenant le contact entre les roues du véhicule et la route malgré les irrégularités de cette dernière.

Avec de tels systèmes de suspension uniquement verticale, dans le cas par exemple d'un obstacle de type nid-de-poule, lorsque le véhicule automobile passe sur celui-ci, le choc le plus brutal pour la roue n'est pas lorsque la roue tombe dans le trou mais plutôt lorsqu'elle en ressort et percute l'épaisseur du bitume. Il en est de même pour les dos-d'âne et les trottoirs où le choc le plus brutal vient également lorsque la roue percute l'épaisseur et donc la hauteur de l'obstacle. Les systèmes existants de suspension verticale qui équipent actuellement les véhicules sont ainsi d'une efficacité moindre face à ces types d'obstacles.

La demande de brevet français FR2679493A1 divulgue une suspension bidirectionnelle pour véhicule automobile assurant un filtrage horizontal et vertical des chocs provenant de la route, ladite suspension bidirectionnelle comprenant une suspension verticale classique et une suspension horizontale de type pendulaire réalisée par deux biellettes verticales, la suspension horizontale de type pendulaire permettant une translation de la roue suivant un arc de cercle dont le rayon est égal à celui des biellettes verticales. Cependant, cette suspension horizontale de type pendulaire existante permet uniquement une faible amplitude de déplacement horizontal de la roue et n'est donc pas optimale. En outre, cette suspension bidirectionnelle existante ne permet pas de corriger en temps réel la direction de la roue en fonction de l'état de la suspension horizontale.

La présente invention vise à résoudre les inconvénients de l'état antérieur de la technique, en proposant un système de suspension bidirectionnelle pour essieu à roues indépendantes d'un véhicule, comprenant un dispositif de suspension verticale de roue et un dispositif de suspension horizontale de roue, ledit dispositif de suspension horizontale de roue comprenant un bloc de suspension horizontale configuré pour être monté à rotation sur le châssis du véhicule, un moyen d'amortissement horizontal relié au bloc de suspension horizontale et un vérin électrique disposé entre le bloc de suspension horizontale et le porte-fusée de la roue associée du véhicule et commandé par un dispositif de commande configuré pour amener le vérin électrique à modifier la direction de la roue associée du véhicule en fonction de la position angulaire du bloc de suspension horizontale, ce qui permet d'obtenir une amplitude importante de déplacement horizontal de la roue en cas d'obstacle rencontré, et ce qui permet en outre de corriger en temps réel la direction de la roue en fonction de la position du bloc de suspension horizontale.

La présente invention a donc pour objet un système de suspension bidirectionnelle pour essieu à roues indépendantes d'un véhicule, comprenant un dispositif de suspension verticale de roue et un dispositif de suspension horizontale de roue, caractérisé par le fait que ledit dispositif de suspension horizontale de roue comprend un bloc de suspension horizontale configuré pour être monté à rotation sur le châssis du véhicule à l'aide de roulements selon un axe de rotation de bloc de suspension horizontale formant un angle compris entre 0° et 45° avec la verticale et un moyen d'amortissement horizontal relié au bloc de suspension horizontale, ledit dispositif de suspension verticale de roue étant disposé entre le bloc de suspension horizontale et le porte-fusée de la roue associée du véhicule, ledit dispositif de suspension horizontale de roue comprenant en outre un vérin électrique disposé entre le bloc de suspension horizontale et le porte-fusée de la roue associée du véhicule et commandé par un dispositif de commande configuré pour amener le vérin électrique à modifier la direction de la roue associée du véhicule en fonction de la position angulaire du bloc de suspension horizontale.

Ainsi, le système de suspension bidirectionnelle selon la présente invention permet d'obtenir un amortissement vertical de la roue associée à l'aide du dispositif de suspension verticale de roue, mais également un amortissement horizontal de la roue associée qui permet d'absorber également les chocs horizontalement à l'aide du dispositif de suspension horizontale de roue. Le système de suspension bidirectionnelle est ainsi apte à faire reculer la roue associée vers l'arrière du véhicule de plusieurs centimètres et à la faire revenir vers l'avant du véhicule, ou inversement lorsqu'un obstacle est rencontré en reculant. Tout en conservant une suspension verticale classique, le système selon la présente invention permet en outre d'obtenir une suspension horizontale, ce qui permet au conducteur d'avoir un bien meilleur confort de conduite.

Le dispositif de suspension verticale permet ainsi le déplacement vertical de la roue de haut en bas, tandis que le dispositif de suspension horizontale permet le déplacement horizontal de la roue, en avant ou en arrière selon la position de l'obstacle rencontré.

L'amplitude importante de rotation du bloc de suspension horizontale sur le châssis du véhicule permet d'obtenir une amplitude importante de déplacement horizontal de la roue en cas d'obstacle rencontré afin d'améliorer l'amortissement horizontal du choc. Le vérin électrique, commandé par le dispositif de commande, permet en outre de corriger en temps réel la direction de la roue en fonction de l'état du bloc de suspension horizontale.

Le dispositif de commande est, de préférence, un automate programmable (ou A.P.I.) qui est un dispositif électronique programmable destiné à automatiser un ou plusieurs appareils électroniques tels que des vérins électriques ou des moteurs électriques, dans le but de rendre autonome un système suivant le programme qui lui aura été inséré. L'automate programmable reçoit des données en provenance de capteurs ou de boutons, celles-ci sont ensuite traitées par un programme défini et des instructions d'action sont ensuite envoyées aux appareils électroniques (vérins, moteurs, ...), ce cycle de traitement se répétant continuellement.

Le vérin électrique a pour fonction de pousser ou tirer une charge (dans le cas présent, le porte-fusée de la roue) en faisant sortir ou entrer une tige. Il a pour spécificité de fonctionner avec un petit moteur électrique placé au pied du cylindre qui actionne un mécanisme à l'intérieur du cylindre, ce qui le rend bien plus précis que les autres types de vérins, tout en gardant une force tout à fait convenable. De plus, son fonctionnement électrique permet de le commander à distance en entrant un programme dans l'automate programmable. L'alimentation du moteur du vérin électrique peut se faire en 24 V qui est la tension classique d'un circuit électrique de voiture.

Dans le cas où un véhicule équipé du système de suspension bidirectionnelle selon la présente invention rencontre, par exemple, un nid-de-poule sur le côté droit de la route, la roue avant droite va alors reculer par rotation du bloc de suspension horizontale, tout en étant amortie par le moyen d'amortissement horizontal. Le même résultat peut être obtenu à gauche si l'obstacle se trouve de ce côté.

Le vérin électrique a ainsi pour rôle de remplacer la barre de direction d'un véhicule traditionnel qui sert à faire tourner les roues directrices en les maintenant parallèles. Il est en effet impossible de mettre une barre de direction dans la présente invention, étant donné que la distance entre les deux blocs de suspension horizontale d'un train roulant équipé de deux systèmes de suspension bidirectionnelle selon la présente invention augmente ou diminue lorsque les blocs de suspension horizontale pivotent.

Le bloc de suspension horizontale est apte à recevoir un roulement supérieur et un roulement inférieur pour permettre la rotation du bloc de suspension horizontale sur le châssis du véhicule. Le bloc de suspension horizontale est, de préférence, disposé entre une plaque supérieure et une plaque inférieure du châssis du véhicule. Sur chaque plaque se trouve un plot cylindrique qui est fixé par des vis et qui a pour but de maintenir le bloc de suspension horizontale en traversant le centre du roulement supérieur ou inférieur du bloc de suspension horizontale, ce qui permet d'assurer la rotation du bloc de suspension horizontale entre les deux plaques supérieure et inférieure du châssis du véhicule.

Selon une caractéristique particulière de la présente invention, le système de suspension bidirectionnelle comprend en outre un demi-arbre de transmission comportant au moins trois arbres à cardans montés en série, l'une des extrémités du demi-arbre de transmission étant configurée pour être reliée au moyeu de la roue associée du véhicule et l'autre des extrémités du demi-arbre de transmission étant configurée pour être reliée au pont moteur du véhicule, l'arbre à cardans configuré pour être relié au pont moteur parmi les au moins trois arbres à cardans étant télescopique, le bloc de suspension horizontale comprenant un trou traversant à roulements traversé par l'un des au moins trois arbres à cardans à l'exception des deux arbres à cardans aux extrémités du demi-arbre de transmission.

Ainsi, dans le cas d'une roue motrice, le demi-arbre de transmission permet d'entraîner en rotation la roue associée, ledit mouvement de rotation étant transmis au demi-arbre de transmission par le pont moteur du véhicule.

Les arbres à cardans (ou joints de cardan) sont des arbres dont les extrémités sont articulées par des joints de cardan qui permettent de transmettre un mouvement de rotation entre deux axes qui ne sont pas alignés.

L'arbre à cardans télescopique est dépliable/rétractable de manière à compenser la variation de distance entre le pont moteur et le moyeu de la roue lorsque la position angulaire du bloc de suspension horizontale change dans le cas où la roue rencontre un obstacle.

Entre les deux roues motrices du véhicule, un bras de sortie moteur vient apporter une force de rotation à un mécanisme de renvoi d'angle du pont moteur, ce qui va entraîner un arbre à cardans, inclus dans le mécanisme de renvoi d'angle, qui va à son tour entraîner l'arbre à cardans télescopique de chaque système de suspension bidirectionnelle de roue motrice. L'arbre à cardans télescopique est apte à se déployer lorsque la roue associée se déplace horizontalement (par exemple, recule face à un obstacle de type trottoir).

Lorsque la roue est droite et qu'elle ne rencontre pas d'obstacle, l'arbre à cardans télescopique est rétracté comme un simple arbre à cardans. Par la suite, dès le passage sur un obstacle tel qu'un trottoir, le bloc de suspension horizontale pivote vers l'arrière et déploie l'arbre à cardans télescopique, ce qui permet d'assurer la motorisation de l'arbre à cardans traversant le bloc de suspension horizontale jusqu'à la roue. Si l'arbre à cardans relié au mécanisme de renvoi d'angle n'avait pas été télescopique, la rotation du bloc de suspension horizontale aurait arraché le mécanisme de renvoi d'angle, étant donné que la distance entre le mécanisme de renvoi d'angle et l'arbre à cardans qui traverse le bloc de suspension horizontale augmente lorsque le bloc de suspension horizontale pivote.

Selon une caractéristique particulière de la présente invention, le dispositif de suspension verticale de roue comprend un ou deux triangles, chaque triangle étant fixé au porte-fusée de la roue associée du véhicule à l'aide d'une rotule et au bloc de suspension horizontale à l'aide d'un axe de rotation de triangle, le dispositif de suspension verticale de roue comprenant en outre un vérin d'amortissement dont l'une des extrémités est fixée à l'un du ou des triangles à l'aide d'un premier axe de rotation de vérin d'amortissement et dont l'autre des extrémités est fixée au bloc de suspension horizontale à l'aide d'un second axe de rotation de vérin d'amortissement.

Lorsque le dispositif de suspension verticale comprend un seul triangle, la suspension horizontale peut, par exemple, être une suspension verticale de type MacPherson, et lorsque le dispositif de suspension verticale comprend deux triangles, la suspension verticale peut, par exemple, être une suspension verticale à double triangulation.

Le dispositif de suspension verticale permet ainsi un amortissement vertical de la roue, c'est-à-dire un amortissement de haut en bas, ce qui permet de maintenir le contact entre la roue et la route malgré les irrégularités de cette dernière.

Le ou les triangles permettent de maintenir la roue du véhicule par rapport au bloc de suspension horizontale, et le vérin d'amortissement permet d'amortir les déplacements verticaux subis par la roue.

Selon une caractéristique particulière de la présente invention, le système de suspension bidirectionnelle comprend en outre un capteur de rotation configuré pour mesurer la position angulaire du bloc de suspension horizontale, ledit capteur de rotation étant relié au dispositif de commande.

Ainsi, le capteur de rotation permet de mesurer en temps réel la position angulaire du bloc de suspension horizontale de manière à permettre au dispositif de commande de modifier, à l'aide du vérin électrique, la direction de la roue en fonction de la position angulaire mesurée. Ainsi, lorsque le bloc de suspension horizontale pivote, la roue conserve tout de même la même direction que celle définie avant la rencontre de l'obstacle.

Selon une caractéristique particulière de la présente invention, le capteur de rotation est un capteur à roue dentée en contact avec le bloc de suspension horizontale.

La roue dentée du capteur de rotation permet ainsi de mesurer la vitesse et la distance de déplacement en millimètres d'un objet (dans le cas présent, le bloc de suspension horizontale) en contact avec ladite roue dentée. Le capteur de rotation peut ainsi envoyer en temps réel des informations à l'automate programmable sur les mouvements du bloc de suspension horizontale.

Le vérin électrique sert ainsi à redresser la roue lorsque le bloc de suspension horizontale pivote de manière à conserver les deux roues parallèles du train associé. Lors d'un choc dû à un obstacle sur l'une des roues (ou les deux), la roue (ou les roues) recule(nt) par pivotement du ou des blocs de suspension horizontale associés, de telle sorte que les roues ne seraient plus parallèles et causeraient une perte d'adhérence au véhicule. C'est à cet instant que les capteurs de rotation vont agir. Ils sont placés de manière à ce que leurs roues dentées soient en contact avec les deux blocs de suspension horizontale du train de véhicule. Ensuite, l'un des deux blocs de suspension horizontale (ou les deux à la fois) va (vont) pivoter pour permettre la suspension horizontale, la roue dentée du capteur de rotation qui est en contact va également tourner de manière synchronisée avec le bloc de suspension horizontale associé. Cela permet de savoir immédiatement si le bloc a tourné et si oui de combien de millimètres (degrés). Les informations sont ensuite envoyées à l'automate programmable afin qu'il puisse, à l'aide des vérins électriques, maintenir constamment les roues parallèles l'une à l'autre. Cette action se fait instantanément, dès que l'une des roues commence à reculer, le capteur de rotation envoie en temps réel sa position à l'automate programmable pour que le vérin électrique puisse ajuster le parallélisme de la roue au fur et à mesure qu'elle recule. De même, si l'obstacle arrive alors que le véhicule recule, la roue avance au lieu de reculer et la même action se produit.

Selon un premier mode de réalisation de la présente invention, le moyen d'amortissement horizontal est un vérin double effet dont l'une des extrémités est fixée au bloc de suspension horizontale à l'aide d'un premier axe de rotation de vérin double effet et dont l'autre des extrémités est configurée pour être fixée au châssis du véhicule à l'aide d'un second axe de rotation de vérin double effet.

L'amortissement du bloc de suspension horizontale se fait ainsi par un vérin double effet, dont le principe est qu'il peut amortir dans les deux sens, c'est-à-dire que sa tige amortit une force aussi bien en sortant du cylindre qu'en entrant dans le cylindre. Ainsi, le vérin double effet permet d'amortir le pivotement du bloc de suspension horizontale que ce dernier pivote vers l'avant ou vers l'arrière du véhicule.

Selon un deuxième mode de réalisation de la présente invention, le moyen d'amortissement horizontal est au moins un ressort de torsion disposé au niveau de l'axe de rotation du bloc de suspension horizontale.

Ainsi, le ressort de torsion permet également d'amortir le pivotement du bloc de suspension horizontale que ce dernier pivote vers l'avant ou vers l'arrière du véhicule.

Selon une caractéristique particulière de la présente invention, le dispositif de commande est en outre configuré pour amener le vérin électrique à modifier la direction de la roue associée du véhicule en fonction de la position angulaire de la colonne de direction du véhicule.

Ainsi, le vérin électrique permet également de modifier la direction de la roue en fonction de la position angulaire de la colonne de direction du véhicule, c'est-à-dire en fonction de la direction donnée par le conducteur à la roue à l'aide du volant de direction du véhicule.

Selon une caractéristique particulière de la présente invention, le système de suspension bidirectionnelle comprend en outre un codeur optique configuré pour mesurer la position angulaire de la colonne de direction du véhicule, ledit codeur optique étant relié au dispositif de commande.

Dans le cas d'une suspension horizontale lors d'un virage, l'automate programmable connaît ainsi l'angle des roues dans le virage grâce au codeur optique et leurs positions de recul/avance grâce aux capteurs de rotation lors du passage de l'obstacle, l'automate programmable peut ainsi calculer de combien la tige du vérin électrique doit sortir (ou rentrer) pour qu'il n'y ait pas d'à-coups.

Le codeur optique a, de préférence, une forme de roulement, et sert à mesurer la rotation d'un bras tournant le traversant en son centre et envoyer lui aussi la mesure de rotation à l'automate programmable. Le fonctionnement du codeur optique se fait grâce à une source lumineuse qui traverse un disque transparent gradué. Un point zéro est enregistré lorsque le bras ne tourne pas, ce qui sert à désigner un repère afin de savoir combien de tours le bras a fait. Dès que le bras commence à tourner, il entraîne le disque qui est synchronisé à celui-ci pour permettre aux graduations de couper le faisceau lumineux à chaque millimètre de rotation du bras, ce qui crée l'information de rotation. Il est également à noter que chaque millimètre du périmètre du disque a une graduation particulière, ce qui permet de savoir dans quel sens tourne le bras (c'est-à-dire, si le conducteur tourne le volant vers la gauche ou vers la droite).

Selon une caractéristique particulière de la présente invention, l'une des extrémités du vérin électrique est reliée au porte-fusée de la roue associée du véhicule à l'aide d'un premier axe de rotation de vérin électrique, et l'autre des extrémités du vérin électrique est reliée au bloc de suspension horizontale à l'aide d'un second axe de rotation de vérin électrique porté entre les deux branches d'une pièce en forme de U, la traverse de ladite pièce en forme de U étant montée à rotation sur le bloc de suspension horizontale selon un axe de rotation de pièce en forme de U qui est orthogonal au second axe de rotation de vérin électrique.

Lorsque le ou les triangles montent ou descendent lors des amortissements verticaux, le vérin électrique doit les suivre en faisant les mêmes mouvements (sinon il se ferait arracher). Pour cette raison, le vérin électrique est maintenu au bloc de suspension horizontale par la pièce en forme de U. Ladite pièce en forme de U traverse une partie du bloc de suspension horizontale grâce à son axe de rotation pouvant tourner afin de permettre la rotation vers le haut et vers le bas de la pièce en forme de U et donc celle du vérin électrique. Au bout de la pièce en forme de U se trouve également le deuxième axe de rotation de vérin électrique traversant le pied du vérin électrique pour assurer la rotation (très légère) vers la droite et vers la gauche qui aura lieu lorsque la tige du vérin électrique sortira ou entrera. Ainsi grâce à cette pièce en forme de U et à son axe, le vérin électrique peut parfaitement suivre le ou les triangles en tournant de haut en bas et de droite à gauche pour la direction de la roue.

La présente invention a également pour objet un train avant de véhicule comprenant un essieu à roues indépendantes comportant deux systèmes de suspension bidirectionnelle tels que décrits ci-dessus associés aux roues avant gauche et droite, respectivement. Le dispositif de commande peut être le même pour les deux roues du train, ou chaque roue peut avoir son dispositif de commande, qui sont alors soit aptes à communiquer entre eux, soit supervisés par un autre dispositif de commande de niveau supérieur relié ou communiquant avec les deux dispositifs de commande, afin de coordonner les mouvements des deux roues du train.

Ainsi, un premier système de suspension bidirectionnelle est relié à la roue avant droite du train avant, et un second système de suspension bidirectionnelle est relié à la roue avant gauche du train avant. Les deux roues du train avant possèdent ainsi chacune une suspension verticale et une suspension horizontale, de manière à améliorer le confort de conduite du conducteur.

La présente invention a également pour objet un train arrière de véhicule comprenant un essieu à roues indépendantes comportant deux systèmes de suspension bidirectionnelle tels que décrits ci-dessus associés aux roues arrière gauche et droite, respectivement. Le dispositif de commande peut être le même pour les deux roues du train, ou chaque roue peut avoir son dispositif de commande, qui sont alors soit aptes à communiquer entre eux, soit supervisés par un autre dispositif de commande de niveau supérieur relié ou communiquant avec les deux dispositifs de commande, afin de coordonner les mouvements des deux roues du train.

Ainsi, un premier système de suspension bidirectionnelle est relié à la roue arrière droite du train arrière, et un second système de suspension bidirectionnelle est relié à la roue arrière gauche du train arrière. Les deux roues du train arrière possèdent ainsi chacune une suspension verticale et une suspension horizontale, de manière à améliorer le confort de conduite du conducteur.

La présente invention a en outre pour objet un véhicule comprenant au moins l'un d'un train avant tel que décrit-ci-dessus et d'un train arrière tel que décrit ci-dessus, ledit véhicule étant l'un parmi à traction, à propulsion et à quatre roues motrices.

Ainsi, le véhicule possède à la fois une suspension verticale et une suspension horizontale sur ses trains de roues avant et arrière.

La motorisation du véhicule peut être faite en propulsion, traction ou quatre roues motrices. De plus, il est possible de rendre les quatre roues motrices directrices en programmant l'automate programmable de telle sorte que, lorsque le conducteur souhaite tourner à droite, les vérins électriques tournent les roues avant vers la droite et les roues arrière vers la gauche (et inversement pour tourner à gauche), ce qui permet de doubler le rayon de braquage du véhicule de manière à rendre plus facile la manœuvre.

Pour mieux illustrer l'objet de la présente invention, on va en décrire ci-après, à titre illustratif et non limitatif, des modes de réalisation préférés, avec référence aux dessins annexés.

Sur ces dessins :
[Fig. 1] est une vue en perspective d'un train avant de véhicule selon un premier mode de réalisation de la présente invention ;
[Fig. 2] est une vue en perspective du train avant de véhicule de la Figure 1 sur laquelle la plaque de châssis supérieure du véhicule n'a pas été représentée ;
[Fig. 3] est une vue de dessus de la Figure 2 ;
[Fig. 4] est une vue en perspective d'un bloc de suspension horizontale selon la présente invention ;
[Fig. 5] est une vue en perspective du dispositif de suspension bidirectionnelle côté droit de la Figure 1 sur laquelle le bloc de suspension horizontale a été représenté en pointillés et en transparence ;
[Fig. 6] est une autre vue en perspective du dispositif de suspension bidirectionnelle côté droit de la Figure 1 sur laquelle la roue et la plaque de châssis supérieure n'ont pas été représentées ;
[Fig. 7] est une vue de dessus de la Figure 2 lorsque la roue avant droite rencontre un obstacle situé à l'avant du véhicule ;
[Fig. 8] est une vue de dessus de la Figure 2 lorsque la roue avant gauche et la roue avant droite rencontrent toutes les deux un obstacle situé à l'avant du véhicule ;
[Fig. 9] est une autre vue en perspective du dispositif de suspension bidirectionnelle côté droit de la Figure 1 ;
[Fig. 10] est une vue de dessus d'un véhicule à quatre roues motrices selon le premier mode de réalisation de la présente invention ;
[Fig. 11] est une vue en perspective d'un ressort de torsion, en tant que moyen d'amortissement horizontal, d'un dispositif de suspension directionnelle selon un second mode de réalisation de la présente invention ; et
[Fig. 12] est une vue de dessus d'un pont moteur selon une variante de la présente invention.

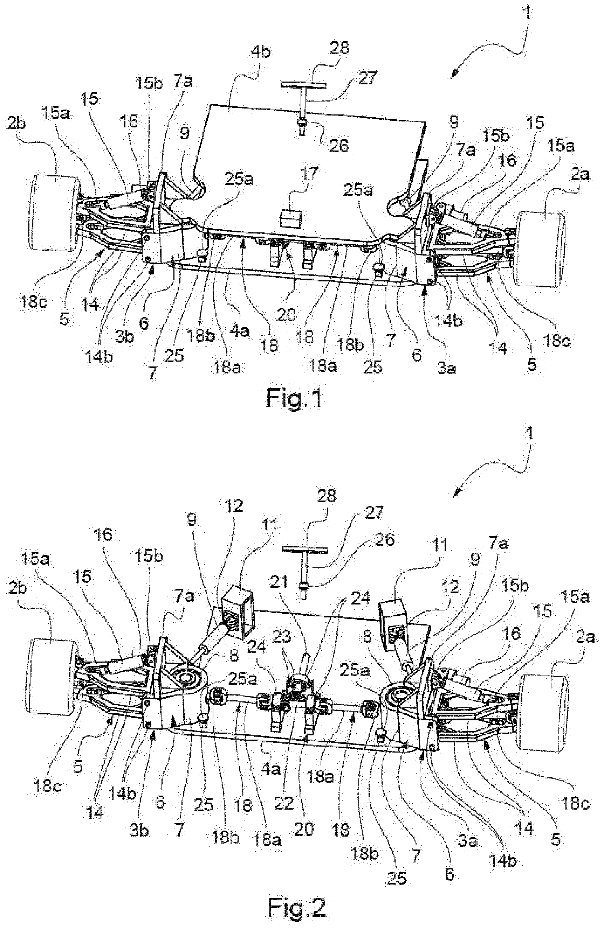

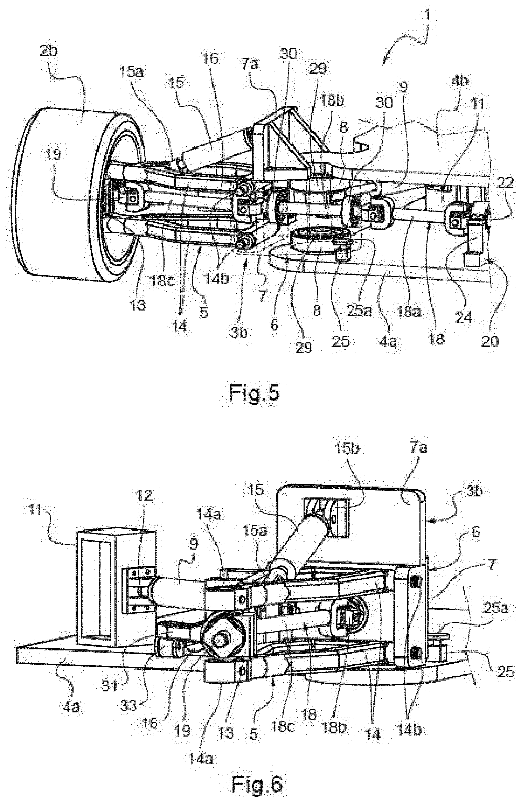

Si l'on se réfère aux Figures 1 à 3, et aux Figures 5 et 6, on peut voir qu'il y est représenté un train avant de véhicule 1 selon un premier mode de réalisation de la présente invention.

Le train avant 1 comprend une roue avant gauche 2a et une roue avant droite 2b qui font partie d'un essieu à roues indépendantes.

Le train avant 1 comprend en outre un premier système de suspension bidirectionnelle 3a relié à la roue avant gauche 2a et un second système de suspension bidirectionnelle 3b relié à la roue avant droite 2b.

Le châssis du train avant de véhicule 1 comprend en outre une plaque de châssis inférieure 4a et une plaque de châssis supérieure 4b, la plaque de châssis supérieure 4b n'ayant pas été représentée aux Figures 2, 3 et 6.

Chacun des premier et second systèmes de suspension bidirectionnelle 3a, 3b comprend un dispositif de suspension verticale de roue 5 et un dispositif de suspension horizontale de roue 6.

Chaque dispositif de suspension horizontale de roue 6 comprend un bloc de suspension horizontale 7 monté à rotation entre la plaque de châssis inférieure 4a et la plaque de châssis supérieure 4b à l'aide de roulements 8 selon un axe de rotation vertical.

Il est à noter que l'axe de rotation du bloc de suspension horizontale 7 pourrait également former un angle compris entre 0° et 45° avec la verticale, sans s'écarter du cadre de la présente invention.

Chaque dispositif de suspension horizontale de roue 6 comprend en outre un vérin double effet 9, en tant que moyen d'amortissement horizontal, ledit vérin double effet 9 ayant l'une de ses extrémités fixée au bloc de suspension horizontale 7 à l'aide d'un premier axe de rotation de vérin double effet 10 et ayant l'autre de ses extrémités fixée à une pièce de support 11 à l'aide d'un second axe de rotation de vérin double effet 12, ladite pièce de support 11 étant fixée entre la plaque de châssis inférieure 4a et la plaque de châssis supérieure 4b.

L'amortissement du pivotement du bloc de suspension horizontale 7 se fait ainsi par le vérin double effet 9, dont le principe est qu'il peut amortir dans les deux sens, c'est-à-dire que sa tige amortit une force aussi bien en sortant du cylindre qu'en entrant dans le cylindre. Ainsi, le vérin double effet 9 permet d'amortir le pivotement du bloc de suspension horizontale 7 que ce dernier pivote vers l'avant ou vers l'arrière du train avant 1.

Le dispositif de suspension verticale de roue 5 est disposé entre le bloc de suspension horizontale 7 et le porte-fusée 13 de la roue 2a, 2b associée.

Le dispositif de suspension verticale de roue 5 comprend deux triangles 14, chaque triangle 14 étant fixé au porte-fusée 13 de la roue 2a, 2b associée à l'aide d'une rotule 14a et au bloc de suspension horizontale 7 à l'aide d'un axe de rotation de triangle 14b.

Il est à noter que le dispositif de suspension verticale de roue 5 pourrait également comprendre un unique triangle 14, sans s'écarter du cadre de la présente invention.

Le dispositif de suspension verticale de roue 5 comprend en outre un vérin d'amortissement 15 dont l'une des extrémités est fixée au triangle 14 supérieur à l'aide d'un premier axe de rotation de vérin d'amortissement 15a et dont l'autre des extrémités est fixée à une plaque de support 7a à l'aide d'un second axe de rotation de vérin d'amortissement 15b, ladite plaque de support 7a étant fixée sur le bloc de suspension horizontale 7.

Le dispositif de suspension verticale de roue 5 permet ainsi un amortissement vertical de la roue 2a, 2b associée, ce qui permet de maintenir le contact entre la roue 2a, 2b associée et la route malgré les irrégularités de cette dernière.

Le dispositif de suspension horizontale de roue 6 comprend en outre un vérin électrique 16 disposé entre le bloc de suspension horizontale 7 et le porte-fusée 13 de la roue 2a, 2b associée.

Le vérin électrique 16 est commandé par un dispositif de commande 17 configuré pour amener le vérin électrique 16 à modifier la direction de la roue 2a, 2b associée en fonction de la position angulaire du bloc de suspension horizontale 7. Le vérin électrique 16, commandé par le dispositif de commande 17, permet ainsi de corriger en temps réel la direction de la roue 2a, 2b associée en fonction de l'état de suspension du bloc de suspension horizontale 7.

Le dispositif de commande 17 a été représenté de manière schématique disposé sur la plaque de châssis supérieure 4b à la Figure 1.

Le dispositif de commande 17 peut être relié au vérin électrique 16 de manière filaire ou sans fil.

Chaque système de suspension bidirectionnelle 3a, 3b permet ainsi d'obtenir un amortissement vertical de la roue 2a, 2b associée à l'aide du dispositif de suspension verticale de roue 5, mais également un amortissement horizontal de la roue 2a, 2b associée qui permet d'absorber également les chocs horizontalement à l'aide du dispositif de suspension horizontale de roue 6. Chaque système de suspension bidirectionnelle 3a, 3b est ainsi apte à faire reculer/avancer la roue 2a, 2b associée vers l'arrière/l'avant du train avant 1 de plusieurs centimètres et à la faire revenir à sa position d'origine. Tout en conservant une suspension verticale classique, les systèmes de suspension bidirectionnelle 3a, 3b permettent en outre d'obtenir une suspension horizontale, ce qui permet au conducteur d'avoir un bien meilleur confort de conduite.

Le dispositif de commande 17 est, de préférence, un automate programmable (ou A.P.I.) qui est un dispositif électronique programmable destiné à automatiser un ou plusieurs appareils électroniques tels que des vérins électriques ou des moteurs électriques, dans le but de rendre autonome un système suivant le programme qui lui aura été inséré. L'automate programmable reçoit des données en provenance de capteurs ou de boutons, celles-ci sont ensuite traitées par un programme défini et des instructions d'action sont ensuite envoyées aux appareils électroniques (vérins, moteurs, ...), ce cycle de traitement se répétant continuellement.

Le vérin électrique 16 a pour fonction de pousser ou tirer le porte-fusée 13 de la roue 2a, 2b associée en faisant sortir ou entrer une tige. Il a pour spécificité de fonctionner avec un petit moteur électrique 16a placé au pied du cylindre qui actionne un mécanisme à l'intérieur du cylindre, ce qui le rend bien plus précis que les autres types de vérins, tout en gardant une force tout à fait convenable. De plus, son fonctionnement électrique permet de le commander à distance en entrant un programme dans le dispositif de commande 17. L'alimentation du moteur 16a du vérin électrique 16 peut, par exemple, se faire en 24 V qui est la tension classique d'un circuit électrique de voiture.

Chaque système de suspension bidirectionnelle 3a, 3b comprend en outre un demi-arbre de transmission 18 comportant trois arbres à cardans 18a, 18b, 18c montés en série.

Il est à noter que chaque demi-arbre de transmission 18 pourrait également comprendre au moins quatre arbres à cardans montés en série, sans s'écarter du cadre de la présente invention.

Les arbres à cardans 18a, 18b, 18c (ou arbres à joints de cardan) sont des arbres dont les extrémités sont articulées par des joints de cardan qui permettent de transmettre un mouvement de rotation entre deux axes qui ne sont pas alignés.

Aux Figures 1 à 3 et aux Figures 5 et 6, les roues 2a, 2b ne rencontrent pas d'obstacle et sont droites, de telle sorte que les blocs de suspension horizontale 7 sont dans leur position de repos dans laquelle, pour chaque système de suspension bidirectionnelle 3a, 3b, les trois arbres à cardans 18a, 18b, 18c sont alignés.

L'une des extrémités de chaque demi-arbre de transmission 18 est configurée pour être reliée au moyeu 19 de la roue 2a, 2b associée, et l'autre des extrémités de chaque demi-arbre de transmission 18 est configurée pour être reliée au pont moteur 20 du train avant de véhicule 1, ledit train avant de véhicule 1 étant un train moteur à traction.

Le pont moteur 20 comprend un bras de sortie moteur 21 configuré pour apporter une force de rotation à un arbre à cardans de pont moteur 22 à l'aide d'un engrenage 23 constitué de deux pignons coniques, l'arbre à cardans de pont moteur 22 étant perpendiculaire au bras de sortie moteur 21, le bras de sortie moteur 21 et l'arbre à cardans de pont moteur 22 étant supportés par des supports à roulements 24 fixés sur la plaque de châssis inférieure 4a, l'engrenage 23 permettant ainsi un renvoi d'angle dans le pont moteur 20.

Les deux extrémités de l'arbre à cardans de pont moteur 22 sont reliées aux arbres à cardans 18a des deux demi-arbres de transmission 18, respectivement. Ainsi, la rotation de l'arbre à cardans de pont moteur 22 entraîne la rotation des demi-arbres de transmission 18 des deux système de suspension bidirectionnelle 3a, 3b, ce qui permet d'entraîner en rotation les roues 2a, 2b motrices du train avant de véhicule 1.

L'arbre à cardans 18a de chaque demi-arbre de transmission 18 est télescopique.

Les arbres à cardans télescopiques 18a sont ainsi dépliables/rétractables de manière à compenser la variation de distance entre le pont moteur 20 et le moyeu de la roue 2a, 2b associée lorsque la position angulaire du bloc de suspension horizontale 7 associé change lorsque la roue 2a, 2b associée rencontre un obstacle.

Lorsque les roues 2a, 2b sont droites et qu'elles ne rencontrent pas d'obstacle, les arbres à cardans télescopiques 18a sont rétractés comme des arbres à cardans classiques, tels que représentés aux Figures 1 à 3, et aux Figures 5 et 6. Par la suite, dès le passage sur un obstacle tel qu'un trottoir, le bloc de suspension horizontale 7 associé pivote vers l'arrière, ce qui entraîne le déploiement de l'arbre à cardans télescopique 18a associé.

Chaque système de suspension bidirectionnelle 3a, 3b comprend en outre un capteur de rotation 25 disposé sur la plaque de châssis inférieure 4a et configuré pour mesurer la position angulaire du bloc de suspension horizontale 7 associé, ledit capteur de rotation 25 étant relié, de manière filaire ou sans fil, au dispositif de commande 17.

Chaque capteur de rotation 25 comprend une roue dentée 25a en contact avec la surface externe du bloc de suspension horizontale 7 associé.

La roue dentée 25a du capteur de rotation 25 permet ainsi de mesurer la vitesse et la distance de déplacement en millimètres du bloc de suspension horizontale 7 en contact avec ladite roue dentée 25a. Le capteur de rotation 25 peut ainsi envoyer en temps réel des informations au dispositif de commande 17 concernant les mouvements du bloc de suspension horizontale 7.

Le capteur de rotation 25 permet de mesurer en temps réel la position angulaire du bloc de suspension horizontale 7 de manière à permettre au dispositif de commande 17 de modifier, à l'aide du vérin électrique 16, la direction de la roue 2a, 2b associée en fonction de la position angulaire mesurée. Ainsi, lorsque le bloc de suspension horizontale 7 pivote, la roue 2a, 2b associée conserve tout de même la même direction que celle définie avant la rencontre de l'obstacle.

Les vérins électriques 16 servent ainsi à redresser les roues 2a, 2b lorsque les blocs de suspension horizontale 7 pivotent de manière à conserver les deux roues 2a, 2b parallèles.

Le train avant 1 comprend en outre un codeur optique 26 configuré pour mesurer la position angulaire de la colonne de direction 27 du véhicule, ledit codeur optique 26 étant relié, de manière filaire ou sans fil, au dispositif de commande 17.

Le codeur optique 26 a une forme de roulement, et sert à mesurer la rotation de la colonne de direction 27 le traversant en son centre et à envoyer la mesure de rotation au dispositif de commande 17. Le fonctionnement du codeur optique 26 se fait grâce à une source lumineuse qui traverse un disque transparent gradué. Un point zéro est enregistré lorsque la colonne de direction 27 ne tourne pas, ce qui sert à désigner un repère afin de savoir combien de tours la colonne de direction 27 a fait. Dès que la colonne de direction commence à tourner, elle entraîne le disque qui est synchronisé à celle-ci pour permettre aux graduations de couper le faisceau lumineux à chaque millimètre de rotation de la colonne de direction 27, ce qui crée l'information de rotation. Il est également à noter que chaque millimètre du périmètre du disque a une graduation particulière, ce qui permet de savoir dans quel sens tourne la colonne de direction 27 (c'est-à-dire, si le conducteur tourne le volant de direction 28 relié à la colonne de direction 27 vers la gauche ou vers la droite).

Le dispositif de commande 17 est en outre configuré pour amener les vérins électriques 16 à modifier la direction des roues 2a, 2b en fonction de la position angulaire de la colonne de direction 27 mesurée à l'aide du codeur optique 26. Les vérins électriques 16 servent ainsi également à modifier la direction des roues 2a, 2b en fonction de l'instruction donnée par le conducteur du véhicule à l'aide du volant de direction 28.

En outre, dans le cas d'une suspension horizontale lors d'un virage, le dispositif de commande 17 connait ainsi l'angle des roues 2a, 2b dans le virage grâce au codeur optique 26 et leurs positions de recul/avance grâce aux capteurs de rotation 25 lors du passage de l'obstacle, le dispositif de commande 17 peut ainsi calculer de combien les tiges des vérins électriques 16 doivent sortir ou rentrer pour qu'il n'y ait pas d'à-coup.

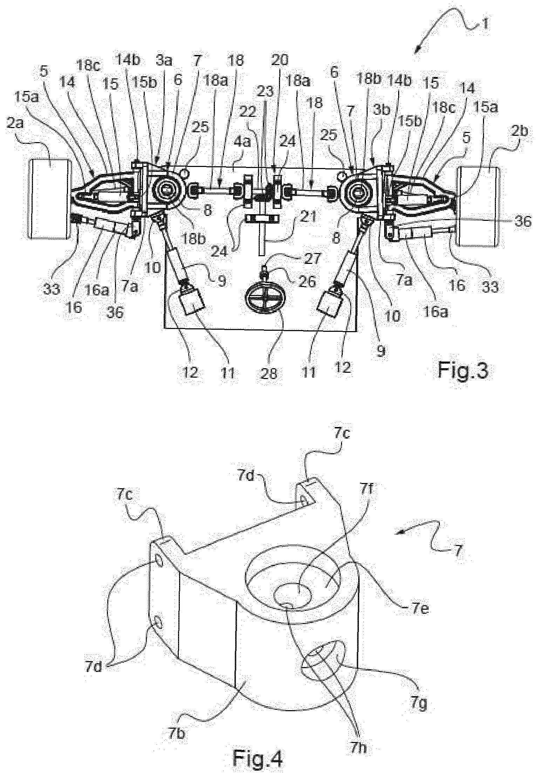

Si l'on se réfère à la Figure 4, on peut voir qu'il y est représenté le bloc de suspension horizontale 7.

Le bloc de suspension horizontale 7 possède une partie sensiblement cylindrique 7b depuis laquelle s'étendent deux ailes 7c verticales et parallèles.

Chaque aile 7c possède deux trous traversants 7d aptes à recevoir les axes de rotation de triangle 14b.

La partie sensiblement cylindrique 7b possède un trou cylindrique supérieur 7e apte à recevoir l'un des roulements 8, et un trou cylindrique inférieur (non représenté à la Figure 4) apte à recevoir l'autre des roulements 8, tel que représenté à la Figure 5.

Les roulements 8 possèdent une forme d'anneau et les trous cylindriques supérieur 7e et inférieur sont reliés entre eux par un trou traversant cylindrique vertical 7f de diamètre inférieur à celui des trous cylindriques supérieur 7e et inférieur.

Tel que représenté à la Figure 5, sur chacune des plaques de châssis inférieure 4a et supérieure 4b se trouve un plot cylindrique 29 qui est, de préférence, fixé par des vis et qui a pour but de maintenir le bloc de suspension horizontale 7 en traversant le centre du roulement 8 associé puis en pénétrant dans le trou traversant cylindrique vertical 7f du bloc de suspension horizontale 7, ce qui permet d'assurer la rotation du bloc de suspension horizontale 7 entre les deux plaques de châssis supérieure 4b et inférieure 4a.

La partie sensiblement cylindrique 7b du bloc de suspension horizontale 7 possède en outre un premier trou cylindrique latéral 7g apte à recevoir un roulement 30 et un second trou cylindrique latéral (non représenté à la Figure 4) apte à recevoir un roulement 30, le second trou cylindrique latéral étant opposé au premier trou cylindrique latéral 7g, tel que représenté à la Figure 5.

Les roulements 30 possèdent une forme d'anneau et les trous cylindriques latéraux 7g sont reliés entre eux par un trou traversant cylindrique horizontal 7h de diamètre inférieur à celui des trous cylindriques latéraux 7g.

Tel que représenté à la Figure 5, 'arbre à cardans 18b du demi-arbre de transmission 18 traverse le bloc de suspension horizontale 7 en traversant les centres des roulements 30 ainsi que le trou traversant cylindrique horizontal 7h du bloc de suspension horizontale 7, ce qui permet d'assurer la rotation du demi-arbre de transmission 18 à l'intérieur du bloc de suspension horizontale 7.

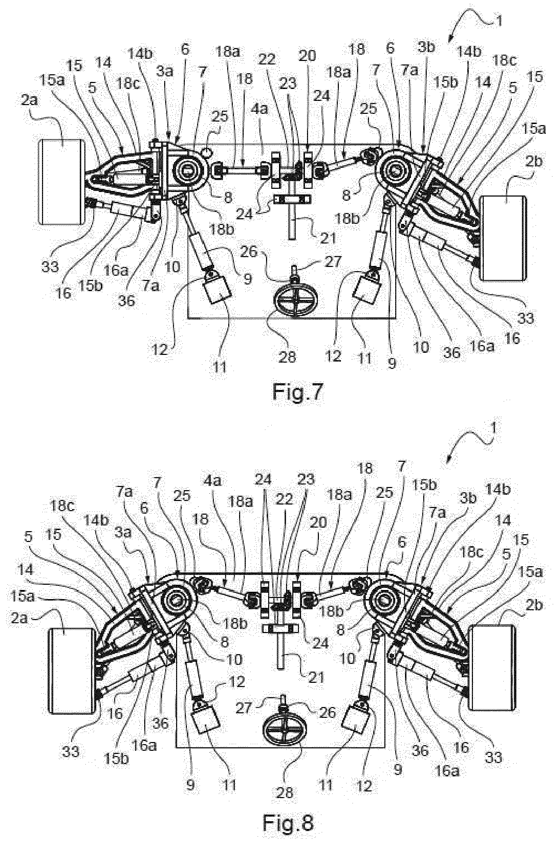

Si l'on se réfère à la Figure 7, on peut voir qu'il y est représenté le train avant de véhicule 1 lorsque la roue avant droite 2b rencontre un obstacle situé à l'avant du véhicule, tel qu'un nid-de-poule.

Lorsque la roue avant droite 2b du train avant de véhicule 1 rencontre l'obstacle de type nid-de-poule (non représenté à la Figure 7), la roue avant droite 2b recule alors par pivotement vers l'arrière du bloc de suspension horizontale 7 associé, ledit pivotement du bloc de suspension horizontale 7 associé étant amorti par le vérin double effet 9 associé.

Pendant le pivotement du bloc de suspension horizontale 7 associé, le capteur de rotation 25 associé, dont la roue dentée 25a est en contact avec la surface externe du bloc de suspension horizontale 7, mesure en temps réel l'amplitude de pivotement (en millimètres ou degrés) ainsi que le sens de pivotement et envoie en temps réel ces informations au dispositif de commande 17. Le dispositif de commande pilote alors en temps réel le vérin électrique 16 associé à la roue avant droite 2b de manière à corriger la direction de la roue avant droite 2b au fur et à mesure que celle-ci recule, afin que les roues avant gauche 2a et droite 2b restent parallèles (telles que représentées à la Figure 7) pour empêcher une perte d'adhérence du véhicule.

En outre, lors du pivotement du bloc de suspension horizontale 7 associé à la roue avant droite 2b, le demi-arbre de transmission 18 associé à la roue avant droite 2b n'est plus aligné, et l'arbre à cardans télescopique 18a associé à la roue avant droite 2b se déploie de manière à compenser l'augmentation de distance entre le pont moteur 20 et la roue avant droite 2b, ce qui permet de toujours assurer la motorisation de la roue avant droite 2b lors de la suspension horizontale.

Il est à noter que, lors du passage sur l'obstacle de type nid-de-poule, le dispositif de suspension verticale de roue 5 permet également d'assurer la suspension verticale de la roue avant droite 2b lorsque celle-ci tombe dans le nid-de-poule puis en ressort.

Bien que la Figure 7 représente la suspension horizontale de la roue avant droite 2b lors de la rencontre d'un obstacle situé à l'avant du train avant 1 lorsque le véhicule avance, le même raisonnement pourrait s'appliquer dans un cas dans lequel la roue avant droite 2b rencontre un obstacle situé à l'arrière du train avant 1 lorsque le véhicule recule, auquel cas le bloc de suspension horizontale 7 associé à la roue avant droite 2b pivote vers l'avant du train avant 1 au lieu de pivoter vers l'arrière du train avant 1.

Si l'on se réfère à la Figure 8, on peut voir qu'il y est représenté le train avant de véhicule 1 lorsque la roue avant gauche 2a et la roue avant droite 2b rencontrent un obstacle situé à l'avant du véhicule, tel qu'un trottoir.

Lorsque la roue avant gauche 2a et la roue avant droite 2b du train avant de véhicule 1 rencontrent l'obstacle de type trottoir (non représenté à la Figure 8), la roue avant gauche 2a et la roue avant droite 2b reculent alors par pivotement vers l'arrière des blocs de suspension horizontale 7, lesdits pivotements des blocs de suspension horizontale 7 étant amortis par les vérins double effet 9.

Pendant les pivotements des blocs de suspension horizontale 7, les capteurs de rotation 25 mesurent en temps réel l'amplitude de pivotement (en millimètres ou degrés) ainsi que le sens de pivotement et envoie en temps réel ces informations au dispositif de commande 17. Le dispositif de commande pilote alors en temps réel les vérin électriques 16 associés à la roue avant gauche 2a et à la roue avant droite 2b de manière à corriger la direction de la roue avant gauche 2a et de la roue avant droite 2b au fur et à mesure que celles-ci reculent, afin que les roues avant gauche 2a et droite 2b restent parallèles (telles que représentées à la Figure 8) et qu'elles conservent la direction qu'elles avaient avant la rencontre de l'obstacle de type trottoir.

En outre, lors des pivotements des blocs de suspension horizontale 7, les demi-arbres de transmission 18 ne sont plus alignés, et les arbres à cardans télescopiques 18a se déploient de manière à compenser l'augmentation de distance entre le pont moteur 20 et les roues avant gauche 2a et droite 2b, ce qui permet de toujours assurer la motorisation des roues avant gauche 2a et droite 2b lors de la suspension horizontale.

Il est à noter que, lors du passage sur l'obstacle de type trottoir, les dispositifs de suspension verticale de roue 5 permettent également d'assurer la suspension verticale des roues avant gauche 2a et droite 2b lorsque celles-ci montent sur le trottoir.

Bien que la Figure 8 représente la suspension horizontale des roues avant gauche 2a et droite 2b lors de la rencontre d'un obstacle situé à l'avant du train avant 1 lorsque le véhicule avance, le même raisonnement pourrait s'appliquer dans un cas dans lequel les roues avant gauche 2a et droite 2b rencontrent un obstacle situé à l'arrière du train avant 1 lorsque le véhicule recule, auquel cas les blocs de suspension horizontale 7 pivotent vers l'avant du train avant 1 au lieu de pivoter vers l'arrière du train avant 1.

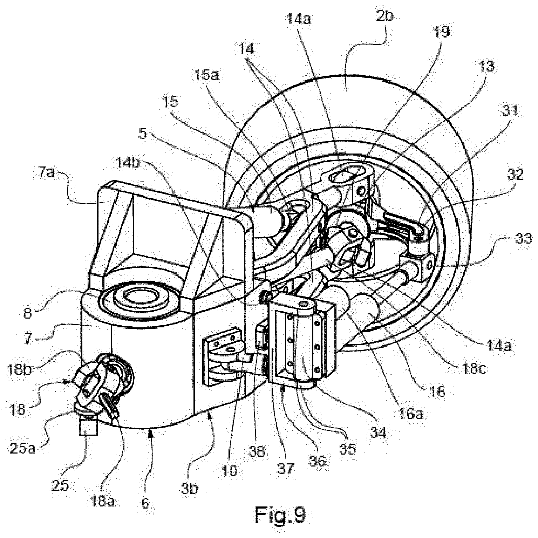

Si l'on se réfère à la Figure 9, on peut voir qu'il y est représenté le système de suspension bidirectionnelle 3b associé à la roue avant droite 2b.

Un bras de guidage 31 s'étend à partir du porte-fusée 13 de la roue 2b, ledit bras de guidage 31 comprenant un axe de pivotement vertical 32 à son extrémité et permettant de modifier l'orientation de la roue 2b lorsque celui-ci est tiré ou poussé par l'intermédiaire de son axe de pivotement vertical 32.

L'une des extrémités du vérin électrique 16 est reliée à l'axe de pivotement vertical 32 du bras de guidage 31 par l'intermédiaire d'un premier axe de rotation horizontal de vérin électrique 33, et l'autre des extrémités du vérin électrique 16 est reliée au bloc de suspension horizontale 7 à l'aide d'un second axe de rotation de vérin électrique 34 porté entre les deux branches 35 d'une pièce en forme de U 36, la traverse 37 de ladite pièce en forme de U 36 étant montée à rotation sur le bloc de suspension horizontale 7 par l'intermédiaire d'un axe de rotation horizontal de pièce en forme de U 38 qui est orthogonal au second axe de rotation de vérin électrique 34.

Ainsi, lorsque les triangles 14 montent ou descendent lors des amortissements verticaux, étant donné que le vérin électrique 16 doit les suivre en faisant les mêmes mouvements, le vérin électrique 16 est maintenu au bloc de suspension horizontale 7 par la pièce en forme de U 36. Ladite pièce en forme de U 36 traverse une partie du bloc de suspension horizontale 7 grâce à son axe de rotation horizontal 38 pouvant tourner afin de permettre la rotation vers le haut et vers le bas de la pièce en forme de U 36 et donc celle du vérin électrique 16. Au bout de la pièce en forme de U 36 se trouve également le deuxième axe de rotation de vérin électrique 34 traversant le pied du vérin électrique 16 pour assurer la rotation (très légère) vers la droite et vers la gauche qui aura lieu lorsque la tige du vérin électrique 16 sortira ou entrera. Ainsi, grâce à cette pièce en forme de U 36 et à son axe 38, le vérin électrique 16 peut parfaitement suivre les triangles 14 en tournant de haut en bas et de droite à gauche pour l'orientation de la roue 2b.

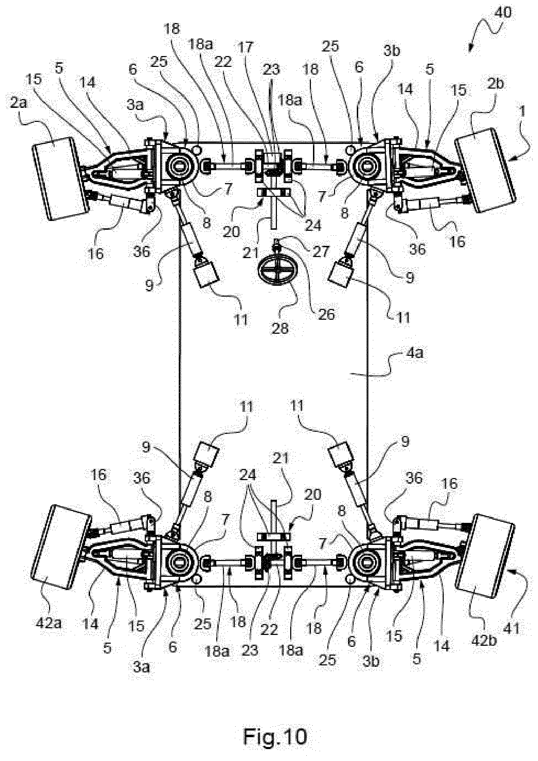

Si l'on se réfère à la Figure 10, on peut voir qu'il y est représenté un véhicule à quatre roues motrices 40 selon le premier mode de réalisation de la présente invention.

Le véhicule 40 comprend un train avant de véhicule 1 identique à celui décrit précédemment et disposé entre une plaque de châssis inférieure 4a et une plaque de châssis supérieure (non représentée à la Figure 10). Les roues avant gauche 2a et droite 2b du train avant 1 sont motrices, comme expliqué ci-dessus.

Le véhicule à quatre roues motrices 40 comprend en outre un train arrière de véhicule 41 comprenant une roue arrière gauche 42a et une roue arrière droite 42b. Les autres éléments du train arrière de véhicule 41 disposés entre les roues arrière gauche 42a et droite 42b sont identiques à ceux du train avant de véhicule 1 décrit précédemment, ils portent les mêmes chiffres de référence et ne seront pas décrits plus en détail ici.

Ainsi, les deux systèmes de suspension bidirectionnelle 3a, 3b reliés aux roues arrière gauche 42a et droite 42b du train arrière 41 permettent à la fois une suspension verticale et une suspension horizontale des roues arrière 42a, 42b, ce qui permet d'améliorer davantage le confort de conduite du conducteur du véhicule 40.

Les roues arrière 42a et 42b du train arrière de véhicule 41 sont également des roues motrices entraînées en rotation par un pont moteur 20 arrière par l'intermédiaire des demi-arbres de transmission 18.

Les vérins électriques 16 du train arrière 41 sont commandés par le dispositif de commande 17 en fonction des données reçues en provenance des capteurs de rotation 25 du train arrière 41 et des données reçues en provenance du codeur optique 26 disposé sur la colonne de direction 27.

A la Figure 10, les quatre roues motrices 2a, 2b, 42a, 42b ont été représentées dans le cas d'un virage à gauche, lesdites roues motrices 2a, 2b, 42a, 42b étant orientées par les vérins électriques 16 en fonction de l'instruction de direction donnée par le conducteur à l'aide du volant de direction 28.

Dans le cas du virage à gauche représenté à la Figure 10, les vérins électriques 16 tournent les roues avant 2a, 2b vers la gauche et les roues arrière 42a, 42b vers la droite (ou inversement dans le cas d'un virage à droite), ce qui permet de doubler le rayon de braquage du véhicule à quatre roues motrices 40 de manière à rendre la manœuvre plus facile.

Il est à noter que le véhicule 40 pourrait également être un véhicule à traction, auquel cas seules les roues avant 2a, 2b du train avant 1 sont motrices, ou un véhicule à propulsion, auquel cas seules les roues arrière 42a, 42b du train arrière 41 sont motrices, sans s'écarter du cadre de la présente invention. Dans les deux cas précités, le train non moteur ne comprend alors pas de pont moteur 20, ni de demi-arbre de transmission 18.

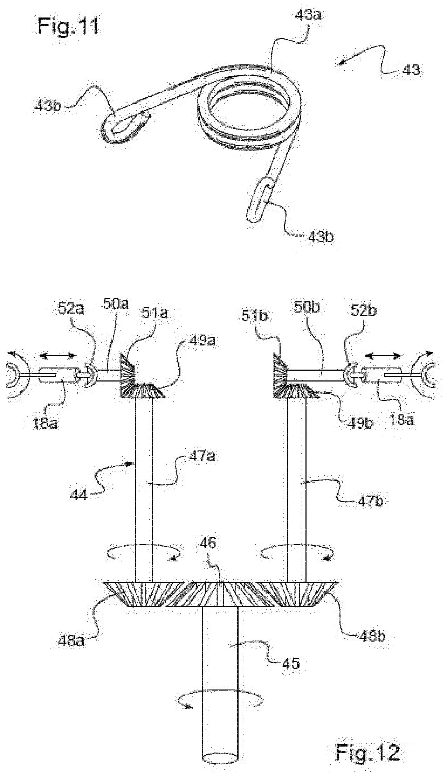

Si l'on se réfère à la Figure 11, on peut voir qu'il y est représenté un ressort de torsion 43, en tant que moyen d'amortissement horizontal, d'un dispositif de suspension directionnelle 3a, 3b selon un second mode de réalisation de la présente invention.

Dans ce deuxième mode de réalisation, les vérins double effet 9 sont remplacés par des ressorts de torsion 43 hélicoïdaux tels que représentés à la Figure 11.

Chaque ressort de torsion 43 est constitué d'un corps 43a comprenant une pluralité de spires, et de deux extrémités 43b supérieure et inférieure.

Pour chaque bloc de suspension horizontale 7, de préférence deux ressorts de torsion 43 sont disposés au niveau de l'axe de rotation du bloc de suspension horizontale 7, l'un des ressorts de torsion 43 étant disposé au niveau de la partie supérieure dudit axe de rotation et l'autre des ressorts de torsion 43 étant disposé au niveau de la partie inférieure dudit axe de rotation.

Les deux ressorts de torsion 43 permettent ainsi de réaliser un amortissement horizontal lors du pivotement du bloc de suspension horizontale 7 vers l'avant ou vers l'arrière, ils font ainsi le même travail que le vérin double effet 9, bien que l'amortissement horizontal soit plus sec et brutal.

Si l'on se réfère à la Figure 12, on peut voir qu'il y est représenté un pont moteur 44 selon une variante de la présente invention.

Dans cette variante, le pont moteur 44 comprend un bras de sortie moteur 45 à l'extrémité duquel est fixé un pignon conique 46.

Le pont moteur 44 comprend en outre deux premiers bras 47a, 47b parallèles au bras de sortie moteur 45.

Chacun des premiers bras 47a, 47b possède un premier pignon conique 48a, 48b au niveau de l'une de ses extrémités et un second pignon conique 49a, 49b au niveau de l'autre de ses extrémités.

Les premiers pignons coniques 48a, 48b des deux premiers bras 47a, 47b sont engrenés avec le pignon conique 46 du bras de sortie moteur 45 de part et d'autre de celui-ci.

Le pont moteur 44 comprend en outre deux seconds bras 50a, 50b perpendiculaires aux premiers bras 47a, 47b.

Chacun des seconds bras 50a, 50b possède un pignon conique 51a, 51b au niveau de l'une de ses extrémités et un joint à cardans 52a, 52b au niveau de l'autre de ses extrémités.

Le pignon conique 51a du second bras 50a est engrené avec le second pignon conique 49a du premier bras 47a, et le pignon conique 51b du second bras 50b est engrené avec le second pignon conique 49b du premier bras 47b.

Le joint à cardans 52a du second bras 50a est relié à l'arbre à cardans télescopique 18a du demi-arbre de transmission 18 associé à la roue gauche 2a, 42a, et le joint à cardans 52b du second bras 50b est relié à l'arbre à cardans télescopique 18a du demi-arbre de transmission 18 associé à la roue droite 2b, 42b.

Les flèches représentées à la Figure 12 indiquent les sens de rotation des différents éléments dans le cas où les roues sont entraînées en marche avant, ainsi que le déploiement possible des arbres à cardans télescopiques 18a.

Il est à noter que les pignons coniques 51a, 51b sont engrenés à la gauche des pignons coniques 49a, 49b, respectivement, ce qui permet d'obtenir le même sens de rotation pour les deux roues reliées au pont moteur 44.

## Revendications

1. Système de suspension bidirectionnelle (3a, 3b) pour essieu à roues indépendantes d'un véhicule, comprenant un dispositif de suspension verticale de roue (5) et un dispositif de suspension horizontale de roue (6), **caractérisé par le fait que** ledit dispositif de suspension horizontale de roue (6) comprend un bloc de suspension horizontale (7) configuré pour être monté à rotation sur le châssis du véhicule à l'aide de roulements (8) selon un axe de rotation de bloc de suspension horizontale formant un angle compris entre 0° et 45° avec la verticale et un moyen d'amortissement horizontal relié au bloc de suspension horizontale (7), ledit dispositif de suspension verticale de roue (5) étant disposé entre le bloc de suspension horizontale (7) et le porte-fusée (13) de la roue (2a, 2b) associée du véhicule, ledit dispositif de suspension horizontale de roue (6) comprenant en outre un vérin électrique (16) disposé entre le bloc de suspension horizontale (7) et le porte-fusée (13) de la roue (2a, 2b) associée du véhicule et commandé par un dispositif de commande (17) configuré pour amener le vérin électrique (16) à modifier la direction de la roue (2a, 2b) associée du véhicule en fonction de la position angulaire du bloc de suspension horizontale (7).

2. Système de suspension bidirectionnelle (3a, 3b) selon la revendication 1, **caractérisé par le fait qu'**il comprend en outre un demi-arbre de transmission (18) comportant au moins trois arbres à cardans (18a, 18b, 18c) montés en série, l'une des extrémités du demi-arbre de transmission (18) étant configurée pour être reliée au moyeu (19) de la roue (2a, 2b) associée du véhicule et l'autre des extrémités du demi-arbre de transmission (18) étant configurée pour être reliée au pont moteur (20) du véhicule, l'arbre à cardans (18a) configuré pour être relié au pont moteur (20) parmi les au moins trois arbres à cardans (18a, 18b, 18c) étant télescopique, le bloc de suspension horizontale (7) comprenant un trou traversant (7h) comprenant des roulements (30) et qui est traversé par l'un (18b) des au moins trois arbres à cardans (18a, 18b, 18c) à l'exception des deux arbres à cardans (18a, 18c) aux extrémités du demi-arbre de transmission (18).

3. Système de suspension bidirectionnelle (3a, 3b) selon la revendication 1 ou la revendication 2, **caractérisé par le fait que** le dispositif de suspension verticale de roue (5) comprend un ou deux triangles (14), chaque triangle (14) étant fixé au porte-fusée (13) de la roue (2a, 2b) associée du véhicule à l'aide d'une rotule (14a) et au bloc de suspension horizontale (7) à l'aide d'un axe de rotation de triangle (14b), le dispositif de suspension verticale de roue (5) comprenant en outre un vérin d'amortissement (15) dont l'une des extrémités est fixée à l'un du ou des triangles (14) à l'aide d'un premier axe de rotation de vérin d'amortissement (15a) et dont l'autre des extrémités est fixée au bloc de suspension horizontale (7) à l'aide d'un second axe de rotation de vérin d'amortissement (15b).

4. Système de suspension bidirectionnelle (3a, 3b) selon l'une des revendications 1 à 3, **caractérisé par le fait qu'**il comprend en outre un capteur de rotation (25) configuré pour mesurer la position angulaire du bloc de suspension horizontale (7), ledit capteur de rotation (25) étant relié au dispositif de commande (17).

5. Système de suspension bidirectionnelle (3a, 3b) selon la revendication 4, **caractérisé par le fait que** le capteur de rotation (25) est un capteur à roue dentée (25a) en contact avec le bloc de suspension horizontale (7).

6. Système de suspension bidirectionnelle (3a, 3b) selon l'une des revendications 1 à 5, **caractérisé par le fait que** le moyen d'amortissement horizontal est un vérin double effet (9) dont l'une des extrémités est fixée au bloc de suspension horizontale (7) à l'aide d'un premier axe de rotation de vérin double effet (10) et dont l'autre des extrémités est configurée pour être fixée au châssis du véhicule à l'aide d'un second axe de rotation de vérin double effet (12).

7. Système de suspension bidirectionnelle (3a, 3b) selon l'une des revendications 1 à 5, **caractérisé par le fait que** le moyen d'amortissement horizontal est au moins un ressort de torsion (43) disposé au niveau de l'axe de rotation du bloc de suspension horizontale (7) et configuré pour amortir le pivotement du bloc de suspension horizontale (7).

8. Système de suspension bidirectionnelle (3a, 3b) selon l'une des revendications 1 à 7, **caractérisé par le fait que** le dispositif de commande (17) est en outre configuré pour amener le vérin électrique (16) à modifier la direction de la roue (2a, 2b) associée du véhicule en fonction de la position angulaire de la colonne de direction (27) du véhicule.

9. Système de suspension bidirectionnelle (3a, 3b) selon la revendication 8, **caractérisé par le fait qu'**il comprend en outre un codeur optique (26) configuré pour mesurer la position angulaire de la colonne de direction (27) du véhicule, ledit codeur optique (26) étant relié au dispositif de commande (17).

10. Système de suspension bidirectionnelle (3a, 3b) selon l'une des revendications 1 à 9, **caractérisé par le fait que** l'une des extrémités du vérin électrique (16) est reliée au porte-fusée (13) de la roue (2a, 2b) associée du véhicule à l'aide d'un premier axe de rotation de vérin électrique (33), et l'autre des extrémités du vérin électrique (16) est reliée au bloc de suspension horizontale (7) à l'aide d'un second axe de rotation de vérin électrique (34) porté entre les deux branches (35) d'une pièce en forme de U (36), la traverse (37) de ladite pièce en forme de U (36) étant montée à rotation sur le bloc de suspension horizontale (7) selon un axe de rotation de pièce en forme de U (38) qui est orthogonal au second axe de rotation de vérin électrique (34).

11. Train avant (1) de véhicule comprenant un essieu à roues indépendantes comportant deux systèmes de suspension bidirectionnelle (3a, 3b) selon l'une des revendications 1 à 10 associés aux roues avant gauche (2a) et droite (2b), respectivement.

12. Train arrière (41) de véhicule comprenant un essieu à roues indépendantes comportant deux systèmes de suspension bidirectionnelle (3a, 3b) selon l'une des revendications 1 à 10 associés aux roues arrière gauche (42a) et droite (42b), respectivement.

13. Véhicule (40) comprenant au moins l'un d'un train avant (1) selon la revendication 11 et d'un train arrière (41) selon la revendication 12, ledit véhicule (41) étant l'un parmi à traction, à propulsion et à quatre roues motrices.]
